# EUROPEAN PATENT SPECIFICATION

(11) **EP 2 557 626 B1**
(45) Date of publication and mention of the grant of the patent: **25.02.2015**
(21) Application number: 11766161.1
(22) Date of filing: 06.04.2011
(51) Int. Cl.: H01M 10/04, H01M 2/16, H01M 10/052, H01M 6/46, H01M 6/48, H01M 10/0585, H01M 4/02

(54) **STACK-TYPE CELL, ENHANCED BI-CELL, ELECTRODE ASSEMBLY FOR SECONDARY BATTERY USING SAME, AND MANUFACTURING METHOD THEREFOR**
STAPELZELLE, ERWEITERTE BIZELLE, ELEKTRODENANORDNUNG FÜR EINE SEKUNDÄRBATTERIE DAMIT UND HERSTELLUNGSVERFAHREN DAFÜR
CELLULE DE TYPE À EMPILEMENT, BI-CELLULE AMÉLIORÉE, ENSEMBLE ÉLECTRODE DESTINÉ À UNE BATTERIE RECHARGEABLE UTILISANT LADITE CELLULE ET PROCÉDÉ DE FABRICATION ASSOCIÉ

(30) Priority: 06.04.2011 KR 20110031918; 06.04.2010 KR 20100031368
(43) Date of publication of application: 13.02.2013
(73) Proprietor: LG Chem, Ltd., Youngdungpo-gu Seoul 150-721 (KR)
(72) Inventor: KIM, Soo-Young, Daejeon 302-805 (KR)
(74) Representative: Cabinet Plasseraud
(86) International application number: PCT/KR2011/002427
(87) International publication number: WO 2011/126310

(56) References cited:
- WO-A1-2007/145441
- WO-A1-2008/099508
- KR-A- 20070 020 597
- KR-A- 20090 008 075
- KR-A- 20090 064 021
- KR-A- 20100 016 708
- US-A1- 2003 013 012
- US-A1- 2004 038 125
- US-A1- 2007 218 355

## Description

### TECHNICAL FIELD

The present invention relates to an improved stack-type cell or bi-cell, an electrode assembly for a secondary battery using the same, and a manufacturing method thereof, and more particularly, to a stack-type cell or bi-cell for a lithium-ion secondary battery, an electrode assembly for a lithium-ion secondary battery using the same, and a manufacturing method thereof.

### RELATED ART

With the development of mobile technologies and an increase in the demand for mobile devices, the demand for secondary batteries has been dramatically increasing. Among secondary batteries, lithium secondary batteries have high energy density and operating voltage and excellent conservation and life characteristics, which makes it the most widely used energy sources for various kinds of electronic products including many mobile devices.

Generally, a secondary battery includes a unit cell, comprised of a cathode electrode, an anode electrode, and a separator interposed therebetween, of a wound or stack configuration, a battery casing made of a metal can or a laminate sheet, and an electrolyte filled in the battery casing.

One of the main studies on secondary batteries is on how to improve its safety. For example, secondary batteries are subject to high temperature and pressure therein that may be caused by abnormal operation of the batteries such as an internal short circuit, overcharge exceeding the allowed current and voltage, exposure to high temperature, deformation caused by a fall or by an external impact, and the like, which can result in batteries catching fire or exploding.

In particular, a serious problem lies in an internal short circuit resulting from shrinkage or breakage of a separator when exposed to high temperature. To solve this problem, studies have been made to investigate the cause and to find its alternative.

A separator for secondary batteries is made from a porous polymer film of polyethylene, polypropylene, and the like. Due to its low costs and excellent chemical resistance, it has advantages in the operating state of the batteries. However, the separator is liable to shrink under a high temperature environment.

In secondary batteries, an electrode assembly having a cathode electrode/separator/anode electrode structure is largely classified into a jelly-roll type (wound) and a stack-type (stacked). The jelly-roll type electrode assembly is manufactured by coating an electrode active material onto a metal foil used as a current collector, followed by drying and pressing, then by cutting it into a band of desired width and length, then separating an anode electrode from a cathode electrode using a separator, and finally by winding the result in a spiral shape. The jelly-roll type electrode assembly has favorable applications to cylindrical batteries. However, when the jelly-roll type electrode assembly is applied to prismatic batteries or pouch-type batteries, the electrode active material may peel off due to locally concentrated stresses, or the batteries may deform due to repeated shrinkage and expansion while charging/discharging.

The stack-type electrode assembly has a plurality of unit cells stacked sequentially, each unit cell composed of a cathode electrode and an anode electrode. The stack-type electrode assembly has an advantage of being easy to obtain a prismatic shape, however it has disadvantages of a complicate manufacturing process and of being subject to a short circuit caused by electrode misalignment when in impact.

To solve these problems, a combination of the jelly-roll type and the stack-type, a so-called stack/folding-type electrode assembly, has been developed. The stack/folding-type electrode assembly is manufactured by folding a full cell of a cathode electrode/separator/anode electrode structure or a bi-cell of a cathode electrode (anode electrode)/separator/anode electrode (cathode electrode)/separator/cathode electrode (anode electrode) structure that has a predetermined unit size, using a long continuous separator film. Examples of stack/folding-type electrode assemblies are disclosed in Korean Patent Publication Nos. 2001-82058, 2001-82059, and 2001-82060. The stack/folding-type electrode assembly is manufactured by placing a plurality of unit cells, each of which comprises a full cell or a bi-cell, on a separator film of a long sheet in a predetermined pattern, and by winding the separator film into a roll.

In the stack/folding-type electrode assembly, electrodes or unit cells may not be fixed in place during stacking (laminating) of separators and electrodes or positioning of unit cells on a separator film, and during winding. Accordingly, many attempts are needed to fix or maintain the electrodes or unit cells in an accurate place.

In this context, some techniques have been disclosed to prevent the slippage of an electrode from a separator film in a stack-type electrode assembly. For example, Japanese Patent Publication No. 2006-107832 discloses a separator film for a battery made of a sheet from a reactive polymer and microcapsules distributed in the polymer, wherein the microcapsules contain an epoxy curing agent, and the reactive polymer has an ethylenic double bond of photoreactivity and an epoxy group in the molecule thereof and is crosslinked by photoreaction of the ethylenic double bond. Japanese Patent Publication No. 2004-143363 discloses a porous separator film with an adhesive and a gelling agent that is produced by introducing a heat-crosslinkable adhesive cured by heat and a gelling agent into a porous film.

However, these conventional arts have disadvantages in that the manufacturing costs of a separator are extremely high, and that the properties of a separator film deteriorate due to a specific component included in the separator film. Also, because unit cells are fixed to a separator film by adhesion, it is impossible to correct (adjust) the location of misaligned unit cells during stacking and/or locating processes. In particular, in a stack/folding-type electrode assembly, such misalignment may cause serious problems while locating a plurality of unit cells on a separator film.

As described above, a stack/folding-type electrode assembly, which is manufactured by laminating electrodes and a separator in each full cell or bi-cell and by laminating cells placed on the separator film, has a remarkable difference between a first lamination strength used to fabricate the full cell or bi-cell and a second lamination strength used to fold the assembly. This difference in strength may affect the processability of a secondary battery, resulting in deteriorated performance of the secondary battery. Also, the stack/folding-type electrode assembly suffers from the electrolyte impregnation characteristics (impregnation rate and wet-out rate) deteriorating during folding.

### TECHNICAL OBJECT

The present invention is designed to solve the problems of the conventional arts, and therefore, it is an object of the present invention to provide an improved stack-type cell or bi-cell in which an electrode assembly is constructed using just a stacking process, and without a folding process that has been used to construct a conventional electrode assembly together with the stacking process, and an electrode assembly for a secondary battery using the same, and a manufacturing method thereof.

Document WO2007145441 discloses a stack/folding-type electrode assembly comprising a plurality of bi-cells, with a separator film placed between them.

### TECHNICAL SOLUTION

To achieve the object of the present invention, a stack-type cell according to the present invention includes a stack of first electrode/separator/second electrode/separator/first electrode arranged in order, and an outer separator stacked on each of the first electrodes.

Preferably, the first electrode may be a cathode electrode, and the second electrode may be an anode electrode.

Preferably, the anode electrode may include an anode current collector and an anode active material coated on at least one surface of the anode current collector, and the cathode electrode may include a cathode current collector and a cathode active material coated on at least one surface of the cathode current collector.

Preferably, the first electrode may be an anode electrode, and the second electrode may be a cathode electrode.

Preferably, the anode electrode may include an anode current collector and an anode active material coated on at least one surface of the anode current collector, and the cathode electrode may include a cathode current collector and a cathode active material coated on at least one surface of the cathode current collector.

Preferably, the separators and/or the outer separators may include any one selected from the group consisting of a microporous polyethylene film, a microporous polypropylene film, a multi-layered film made from combinations of these films, and a microporous polymer film for a polymer electrolyte made from polyvinylidene fluoride, polyethylene oxide, polyacrylonitrile, or a polyvinylidene fluoride hexafluoropropylene copolymer.

To achieve the object of the present invention, an electrode assembly for a secondary battery according to a preferred exemplary embodiment of the present invention may include at least one first stack-type cell and at least one second stack-type cell stacked sequentially, in which the first stack-type cell has a structure of a stack-type cell according to the above embodiment and the second stack-type cell has a stack of second electrode/separator/first electrode/separator/second electrode arranged in order.

According to another preferred exemplary embodiment of the present invention, an electrode assembly for a secondary battery may include at least one first stack-type cell and at least one second stack-type cell stacked alternately, in which the first stack-type cell has a stack of first electrode/separator/second electrode/separator/first electrode arranged in order, and the second stack-type cell has a stack of outer separator/second electrode/separator/first electrode/separator/second electrode/outer separator arranged in order.

Preferably, the first electrode may be a cathode electrode, and the second electrode may be an anode electrode.

Preferably, the anode electrode may include an anode current collector and an anode active material coated on at least one surface of the anode current collector, and the cathode electrode may include a cathode current collector and a cathode active material coated on at least one surface of the cathode current collector.

Preferably, the first electrode may be an anode electrode, and the second electrode may be a cathode electrode.

Preferably, the anode electrode may include an anode current collector and an anode active material coated on at least one surface of the anode current collector, and the cathode electrode may include a cathode current collector and a cathode active material coated on at least one surface of the cathode current collector.

Preferably, the separators and/or the outer separators may include any one selected from the group consisting of a microporous polyethylene film, a microporous polypropylene film, a multi-layered film made from combinations of these films, and a microporous polymer film for a polymer electrolyte made from polyvinylidene fluoride, polyethylene oxide, polyacrylonitrile, or a polyvinylidene fluoride hexafluoropropylene copolymer.

Preferably, the electrode assembly may further include a supplementary separator stackable on the outer surface of any one of the electrodes not having the outer separator.

To achieve the object of the present invention, a secondary battery according to a preferred exemplary embodiment of the present invention may include an electrode assembly as described above, a casing to receive the electrode assembly, and an electrolyte impregnated into the electrode assembly received in the casing.

To achieve the object of the present invention, a method for manufacturing an electrode assembly for a secondary battery according to the present invention includes preparing at least one first stack-type cell having a stack of first electrode/separator/second electrode/separator/first electrode arranged in order, preparing at least one second stack-type cell having a stack of outer separator/second electrode/separator/first electrode/separator/second electrode/outer separator arranged in order, and alternately stacking the at least one first stack-type cell and the at least one second stack-type cell.

Preferably, the method may further include stacking a supplementary separator on the outer surface of any one of the electrodes not having the outer separator.

To achieve the object of the present invention, a stack-type bi-cell for a secondary battery according to a preferred exemplary embodiment of the present invention may include a stack of first electrode/separator/second electrode/separator/first electrode arranged in order, and an outer separator stacked on each of the first electrodes.

Preferably, the first electrode may be a cathode electrode, and the second electrode may be an anode electrode.

Preferably, the anode electrode may include an anode current collector and an anode active material coated on at least one surface of the anode current collector, and the cathode electrode may include a cathode current collector and a cathode active material coated on at least one surface of the cathode current collector.

Preferably, the first electrode may be an anode electrode, and the second electrode may be a cathode electrode.

Preferably, the anode electrode may include an anode current collector and an anode active material coated on at least one surface of the anode current collector, and the cathode electrode may include a cathode current collector and a cathode active material coated on at least one surface of the cathode current collector.

Preferably, the separators and/or the outer separators may include any one selected from the group consisting of a microporous polyethylene film, a microporous polypropylene film, a multi-layered film combinations of these films, and a microporous polymer film for a polymer electrolyte made from polyvinylidene fluoride, polyethylene oxide, polyacrylonitrile, or a polyvinylidene fluoride hexafluoropropylene copolymer.

To achieve the object of the present invention, an electrode assembly for a secondary battery according to a preferred exemplary embodiment of the present invention may include at least one first bi-cell and at least one second bi-cell stacked sequentially, in which the first bi-cell has a stack of second electrode/separator/first electrode/separator/second electrode arranged in order and the second bi-cell has a structure of a stack-type bi-cell according to the above embodiment.

According to another preferred exemplary embodiment of the present invention, an electrode assembly for a secondary battery may include at least one first bi-cell and at least one second bi-cell stacked alternately, in which the first bi-cell has a stack of first electrode/separator/second electrode/separator/first electrode arranged in order and the second stack-type cell has a stack of outer separator/second electrode/separator/first electrode/separator/second electrode/outer separator arranged in order.

Preferably, the first electrode may be a cathode electrode, and the second electrode may be an anode electrode.

Preferably, the anode electrode may include an anode current collector and an anode active material coated on at least one surface of the anode current collector, and the cathode electrode may include a cathode current collector and a cathode active material coated on at least one surface of the cathode current collector.

Preferably, the first electrode may be an anode electrode, and the second electrode may be a cathode electrode.

Preferably, the anode electrode may include an anode current collector and an anode active material coated on at least one surface of the anode current collector, and the cathode electrode may include a cathode current collector and a cathode active material coated on at least one surface of the cathode current collector.

Preferably, the separators and/or the outer separators may include any one selected from the group consisting of a microporous polyethylene film, a microporous polypropylene film, a multi-layered film made from combinations of these films, and a microporous polymer film for a polymer electrolyte made from polyvinylidene fluoride, polyethylene oxide, polyacrylonitrile, or a polyvinylidene fluoride hexafluoropropylene copolymer.

The electrode assembly may further include a supplementary separator stackable on the outer surface of any one of the electrodes not having the outer separator.

To achieve the object of the present invention, a method for manufacturing an electrode assembly for a secondary battery according to a preferred exemplary embodiment of the present invention may include preparing at least one first bi-cell having a stack of first electrode/separator/second electrode/separator/first electrode arranged in order, preparing at least one second bi-cell having a stack of outer separator/second electrode/separator/first electrode/separator/second electrode/outer separator arranged in order, and alternately stacking the at least one first bi-cell and the at least one second bi-cell.

Preferably, the method may further include stacking a supplementary separator on the outer surface of any one of the electrodes not having the outer separator.

### ADVANTAGEOUS EFFECTS

The improved stack-type cell or bi-cell according to the present invention, the electrode assembly for a secondary battery using the same, and the manufacturing method thereof have the following effects.

First, the present invention may manufacture a desired capacity of a secondary battery by subsequently stacking (or laminating) a conventional stack-type cell or bi-cell (C-type or A-type) and an improved stack-type cell or bi-cell according to the present invention, which further has an outer separator on a conventional stack-type cell or bi-cell, resulting in shortened manufacturing process.

Second, a conventional stack/folding-type electrode assembly has a limitation in processability due to a difference between a lamination strength used to fabricate a stack-type cell or bi-cell and a lamination strength used to fold the assembly, whereas the present invention approximates a lamination strength for all the process to a lamination strength for a stacking process, thereby solving the conventional processability reduction problem caused by the difference in lamination strength and improving the performance and yield of a secondary battery.

Third, the secondary battery according to the present invention eliminates the needs for a separator film and a folding process, thereby achieving improvement in an impregnation rate and a wet-out rate of an electrolyte.

Other features and aspects may be apparent from the following detailed description, the drawings, and the claims.

### DESCRIPTION OF THE DRAWINGS

Other objects and aspects of the present disclosure will become apparent from the following descriptions of the embodiments with reference to the accompanying drawings in which:
FIG. 1 is a schematic cross-sectional view illustrating a structure of an improved stack-type cell or bi-cell according to a preferred exemplary embodiment of the present invention.
FIG. 2 is a schematic cross-sectional view illustrating a structure of a corresponding stack-type cell or bi-cell used to construct an electrode assembly for a secondary battery together with the improved stack-type cell or bi-cell of FIG. 1.
FIG. 3 is a cross-sectional view illustrating an example of the improved stack-type cell or bi-cell of FIG. 1.
FIG. 4 is a cross-sectional view illustrating another example of the improved stack-type cell or bi-cell of FIG. 1.
FIG. 5 is a cross-sectional view illustrating an example of the corresponding stack-type cell or bi-cell of FIG. 2.
FIG. 6 is a cross-sectional view illustrating another example of the corresponding stack-type cell or bi-cell of FIG. 2.
FIG. 7 is an exploded cross-sectional view illustrating an electrode assembly for a secondary battery according to a preferred exemplary embodiment of the present invention.
FIG. 8 is an assembled cross-sectional view of FIG. 7.
FIG. 9 is a schematic cross-sectional view illustrating a structure of an improved stack-type cell or bi-cell according to another preferred exemplary embodiment of the present invention.
FIG. 10 is a schematic cross-sectional view illustrating a structure of a corresponding stack-type cell or bi-cell used to construct an electrode assembly for a secondary battery together with the improved stack-type cell or bi-cell of FIG. 9.
FIG. 11 is a cross-sectional view illustrating an example of the improved stack-type cell or bi-cell of FIG. 9.
FIG. 12 is a cross-sectional view illustrating another example of the improved stack-type cell or bi-cell of FIG. 9.
FIG. 13 is a cross-sectional view illustrating an example of the corresponding stack-type cell or bi-cell of FIG. 10.
FIG. 14 is a cross-sectional view illustrating another example of the corresponding stack-type cell or bi-cell of FIG. 10.
FIG. 15 is an exploded cross-sectional view illustrating an electrode assembly for a secondary battery according to another preferred exemplary embodiment of the present invention.
FIG. 16 is an assembled cross-sectional view of FIG. 15.

### DETAINED DESCRIPTION

The following detailed description is provided to assist the reader in gaining a comprehensive understanding of the methods, apparatuses, and/or systems described herein.

Also, descriptions of well-known functions and constructions may be omitted for increased clarity and conciseness.

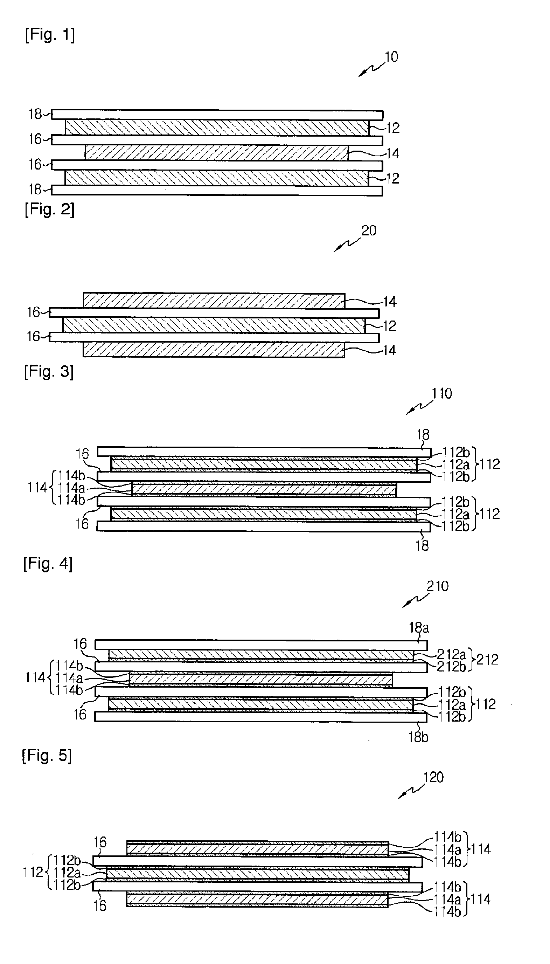

FIG. 1 is a schematic cross-sectional view illustrating a structure of an improved stack-type cell or bi-cell according to a preferred exemplary embodiment of the present invention. FIG. 2 is a schematic cross-sectional view illustrating a structure of a corresponding stack-type cell or bi-cell used to construct an electrode assembly for a secondary battery together with the improved stack-type cell or bi-cell of FIG. 1.

Referring to FIG. 1, the improved stack-type cell or bi-cell 10 according to a preferred exemplary embodiment of the present invention has a structure of outer separator 18/first electrode 12/separator 16/second electrode 14/separator 16/first electrode 12/outer separator 18 stacked or laminated in order. The improved stack-type cell or bi-cell 10 of FIG. 1, a so-called 'A-type' stack-type cell or bi-cell, may be fabricated by stacking or laminating the first electrode 12/separator 16/second electrode 14/separator 16/first electrode 12, and stacking or laminating the outer separators 18 onto the outer surfaces of the resulting stack. Alternatively, the improved stack-type cell or bi-cell 10 may be fabricated by stacking or laminating the outer separator 18/first electrode 12/separator 16/second electrode 14/separator 16/first electrode 12/outer separator 18 at once.

The term "stacking" used in the specification means fixing or coupling between an electrode and a separator or among cells by means of an adhesive, and the term "lamination" means coupling between an electrode and a separator or among cells by means of thermal fusion. Therefore, in the specification, between the A-type cell, the C-type cell, the improved bi-cell or the stack-type cell and corresponding bi-cells, only a stacking structure with an adhesive layer may be formed, only a lamination structure without an adhesive layer may be formed, or these structures may be present in mixture. In addition, in the laminating process, two stack-type cells, corresponding bi-cells or A-type and C-type cells may be respectively laminated so that the laminated stacks may be additionally laminated.

Referring to FIG. 2, the corresponding stack-type cell or bi-cell 20 used with the improved stack-type cell or bi-cell of FIG. 1 corresponds to a conventional stack-type cell or bi-cell, and has a structure of second electrode 14/separator 16/first electrode 12/separator 16/second electrode 14 stacked or laminated in order.

As shown in FIGS. 1 and 2, the first electrode 12 is a cathode electrode, and the second electrode 14 is an anode electrode. It is obvious to an ordinary person skilled in the art that the first electrode 12, the second electrode 14, the separator 16, and the outer separator 18 are each cut into a regular shape and size to form a lamination structure of a stack-type cell or bi-cell, and are then stacked or laminated on each other.

FIG. 3 is a cross-sectional view illustrating an example of the improved stack-type cell or bi-cell of FIG. 1. The elements having the same reference numerals indicated in FIGS. 1 and 2 are referred to as having the same function

Referring to FIG. 3, the improved stack-type cell or bi-cell 110 has a structure of outer separator 18/cathode electrode 112/separator 16/anode electrode 114/separator 16/cathode electrode 112/outer separator 18 stacked in order. Here, the cathode electrode 112 includes a cathode current collector 112a and a cathode active material 112b coated on both sides of the cathode current collector 112a, and the anode electrode 114 includes an anode current collector 114a and an anode active material 114b coated on both sides of the anode current collector 114a.

FIG. 4 is a cross-sectional view illustrating another example of the improved stack-type cell or bi-cell of FIG. 1. The elements having the same reference numerals indicated in FIGS. 1 to 3 are referred to as having the same function.

Referring to FIG. 4, the improved stack-type cell or bi-cell 210 has a structure of first outer separator 18a/first cathode electrode 212/separator 16/anode electrode 114/separator 16/second cathode electrode 112/second outer separator 18b stacked in order. Here, the first cathode electrode 212 includes a cathode current collector 212a in contact with the first outer separator 18a, and a cathode active material 212b coated on one side of the cathode current collector 212a to come in contact with the separator 16. The second cathode electrode 112 has the same structure as the cathode electrode 112 of FIG. 3.

An ordinary person skilled in the art will understand that unlike the improved stack-type cell or bi-cell 110 of FIG. 3, the improved stack-type cell or bi-cell 210 of FIG. 4 is located at any one outmost side of an electrode assembly 300 for a secondary battery during stacking or laminating processes in the fabricating of the electrode assembly 300, as described below. It is obvious that the improved stack-type cell or bi-cell 110 of FIG. 3 may be placed at the outmost side of the electrode assembly 300, however in this case, the loss of capacity (performance) may be considered.

FIG. 5 is a cross-sectional view illustrating an example of the corresponding stack-type cell or bi-cell of FIG. 2.

Referring to FIG. 5, the corresponding stack-type cell or bi-cell 120 has a structure of anode electrode 114/separator 16/cathode electrode 112/separator 16/anode electrode 114 stacked in order. Here, the anode electrode 114 includes an anode current collector 114a and an anode active material 114b coated on both sides of the anode current collector 114a, and the cathode electrode 112 includes a cathode current collector 112a and a cathode active material 112b coated on both sides of the cathode current collector 112a. During stacking or laminating processes of an electrode assembly, the anode electrodes 114 of the corresponding stack-type cell or bi-cell 120 of FIG. 5 are stacked or laminated in contact with the outer separator 18 of the stack-type cell or bi-cell 110 of FIG. 3 and/or the second outer separator 18b of the stack-type cell or bi-cell 210 of FIG. 4, as described below.

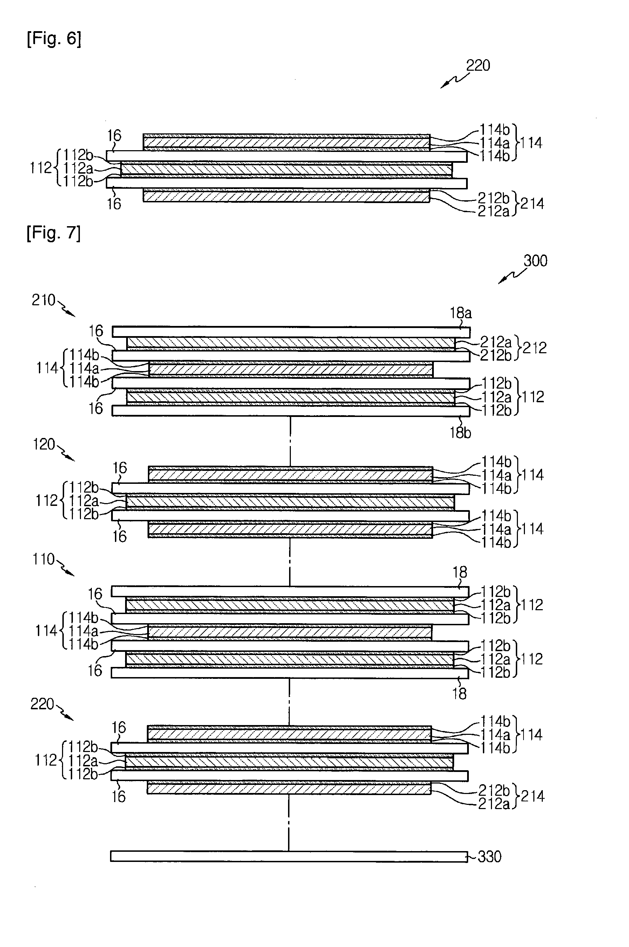

FIG. 6 is a cross-sectional view illustrating another example of the corresponding stack-type cell or bi-cell of FIG. 2.

Referring to FIG. 6, the corresponding stack-type cell or bi-cell 20 has a structure of first anode electrode 114/separator 16/cathode electrode 112/separator 16/second anode electrode 214 stacked or laminated in order. Here, the first anode electrode 114 is equal to the anode electrode 114 of the above embodiment and includes an anode current collector 114a and an anode active material 114b coated on both sides of the anode current collector 114a, and the second anode electrode 214 includes an anode current collector 214a and an anode active material 214b coated on one side of the anode current collector 214a. It is obvious to an ordinary person skilled in the art that the second anode electrode 214 is located at the outmost side of an electrode assembly during stacking or laminating processes of the electrode assembly. The improved stack-type cell or bi-cell 120 of FIG. 5 may also be located at the outmost side of an electrode assembly, however in this case, the loss of capacity may be considered.

According to the above embodiments described with reference to FIGS. 3 to 6, the bi-cell for a lithium secondary battery may include the cathode electrode 112 obtained by binding the cathode active material 112b which uses, as a main component, lithium intercalation materials, for example, lithiated manganese oxides, lithiated cobalt oxides, lithiated nickel oxides, or combinations thereof, that is, composite oxides, to the cathode current collector 112a formed of a foil made from aluminum, nickel, or combinations thereof, and the anode electrode 114 obtained by binding the anode active material 114b which uses, as a main component, lithium metals, lithium alloys, or lithium intercalation materials, for example, carbon, petroleum coke, activated carbon, graphite, or other carbons, to the anode current collector 114a formed of a foil made from copper, gold, nickel, copper alloys, or combinations thereof.

According to the above embodiments, the separators 16, the outer separators 18, 18a, and 18b, and a supplementary separator 330 which will be described below may be formed from different materials, however they are preferably formed from the same material. Also, these separators 16, 18, 18a, 18b, and 330 may preferably be bondable by heat fusion to fabricate the cells or bi-cells 10, 20, 110, 120, 210, and 220, and/or the electrode assembly. Each of the separators 16, the outer separators 18, 18a, and 18b, and the supplementary separator 330 may include any one selected from the group consisting of a microporous polyethylene film, a microporous polypropylene film, a multi-layered film made from combinations of these films, and a microporous polymer film for a polymer electrolyte made from polyvinylidene fluoride, polyethylene oxide, polyacrylonitrile, or a polyvinylidene fluoride hexafluoropropylene copolymer.

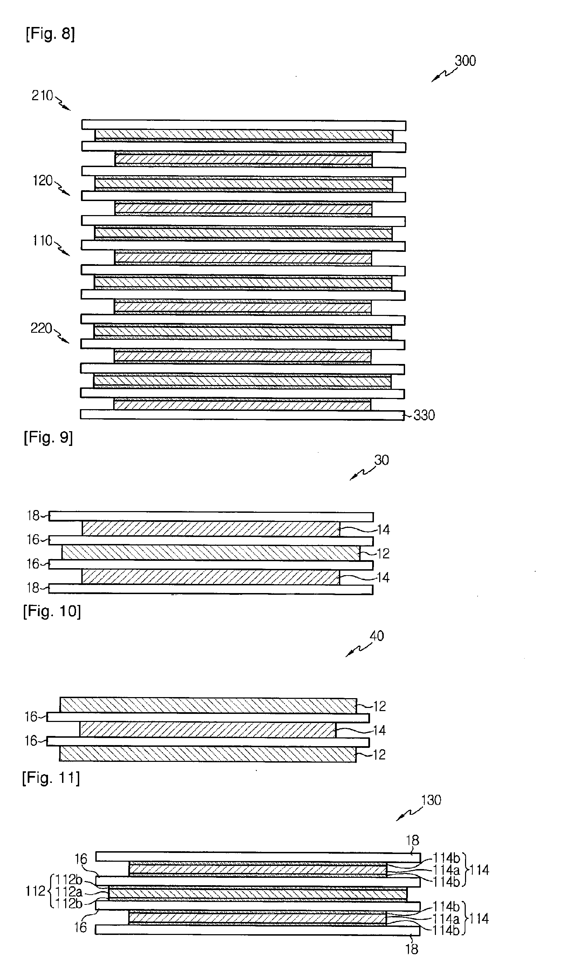

FIG. 7 is an exploded cross-sectional view illustrating an electrode assembly for a secondary battery according to a preferred exemplary embodiment of the present invention. FIG. 8 is an assembled cross-sectional view of FIG. 7.

Referring to FIGS. 7 and 8, the electrode assembly 300 according to a preferred exemplary embodiment of the present invention is constructed through a stacking process alone, rather than through both stacking and folding processes that have been used according to the conventional art. The electrode assembly 300 includes the improved stack-type cell or bi-cell 10, 110 and 210, and the corresponding stack-type cell or bi-cell 20, 120 and 220 stacked or laminated sequentially or alternately upon each other. That is, the electrode assembly 300 according to this embodiment includes a desired number of the improved stack-type cells or bi-cells 10, 110, and 210, and a desired number of the corresponding stack-type cells or bi-cells 20, 120, and 220 stacked in order or laminated under proper conditions, each cell composed of a plurality of electrodes and a plurality of separators stacked or laminated upon each other.

Specifically, as shown in FIGS. 7 and 8, the electrode assembly 300 according to a preferred exemplary embodiment of the present invention includes the improved stack-type cell or bi-cell 210 having the first outer separator 18a at the outmost side/corresponding stack-type cell or bi-cell 120/improved stack-type cell or bi-cell 110/corresponding stack-type cell or bi-cell 220 stacked sequentially upon each other, and the supplementary separator 330 stacked or laminated in contact with the anode current collector 212a of the second anode electrode 214 at the outmost side of the corresponding stack-type cell or bi-cell 220. Although this embodiment shows two improved stack-type cells or bi-cells and two corresponding stack-type cells or bi-cells stacked or laminated sequentially or alternately upon each other, it is obvious to an ordinary person skilled in the art that the number of stack-type cells or bi-cells used may be properly selected depending on a desired capacity of a battery and the like.

Meanwhile, even though FIGS. 7 and 8 depict that the cathode and the anode are located at the outermost layer of the stacked or laminated electrode assembly, it is just an example, and it is preferred that the electrode assembly is stacked or laminated so that anodes are located at both sides of the electrode assembly. In addition, in this case, the outer surface of the outermost anode may not be coated with an anode active material, and even in this case, the second battery has no capacity loss. Preferably, the anodes disposed at the outermost layers of the electrode assembly may have different thicknesses and may also be configured to be thinner than other neighboring anodes.

In an alternative example, the stacked or laminated electrode assembly may be configured so that only cathodes are disposed at outermost layers thereof. Here, each cathode is preferably not coated with a cathode active material and/or coated with less cathode active material in comparison to other cathodes.

FIG. 9 is a schematic cross-sectional view illustrating a structure of an improved stack-type cell or bi-cell according to another preferred exemplary embodiment of the present invention. FIG. 10 is a schematic cross-sectional view illustrating a structure of a corresponding stack-type cell or bi-cell used to construct an electrode assembly for a secondary battery together with the improved stack-type cell or bi-cell of FIG. 9. The elements having the same reference numerals indicated in FIGS. 1 to 8 are referred to as having the same function.

Referring to FIG. 9, the improved stack-type cell or bi-cell 30 according to another preferred exemplary embodiment of the present invention includes a structure of second electrode 14/separator 16/first electrode 12/separator 16/second electrode 14 stacked in order, and outer separators 18 respectively stacked on the outer sides of the second electrodes 14. The improved stack-type cell or bi-cell 30 of FIG. 9 has a so-called 'C-type' bi-cell structure.

Referring to FIG. 10, the corresponding stack-type cell or bi-cell 40 used with the improved stack-type cell or bi-cell 30 of FIG. 9 corresponds to a conventional stack-type cell or bi-cell, and has a structure of first electrode 12/separator 16/second electrode/14/separator 16/first electrode12 stacked in order.

As shown in FIGS. 9 and 10, the first electrode 12 is a cathode electrode, and the second electrode 14 is an anode electrode.

FIG. 11 is a cross-sectional view illustrating an example of the improved stack-type cell or bi-cell of FIG. 9.

Referring to FIG. 11, the improved stack-type cell or bi-cell 130 has a structure of outer separator 18/anode electrode 114/separtor 16/cathode electrode 112/separatotr 16/anode electrode 114/outer separator 18 stacked in order. Here, the anode electrode 114 includes an anode current collector 114a and an anode active material 114b coated on both sides of the anode current collector 114a, and the cathode electrode 112 includes a cathode current collector 112a and a cathode active material 112b coated on both sides of the cathode current collector 112a.

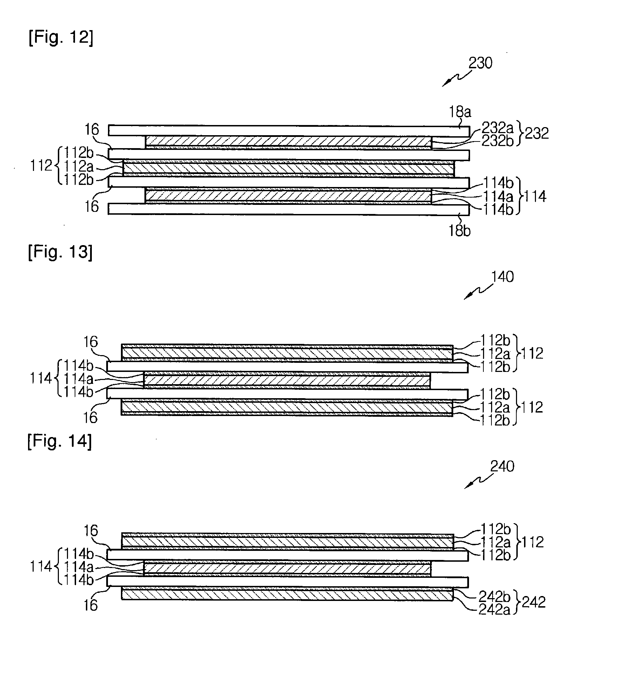

FIG. 12 is a cross-sectional view illustrating another example of the improved stack-type cell or bi-cell of FIG. 9.

Referring to FIG. 12, the improved stack-type cell or bi-cell 230 has a structure of first outer separator 18a/first anode electrode 232/separator 16/cathode electrode 112/separator 16/second anode electrode 114/second outer separator 18b stacked in order. Here, the first anode electrode 232 includes an anode current collector 232a in contact with the first outer separator 18a, and an anode active material 232b coated on one side of the anode current collector 232a to come in contact with the separator 16. The improved stack-type cell or bi-cell 230 may be located at any one outmost side of an electrode assembly 400 for a secondary battery during a stacking process in the fabricating of the electrode assembly 400, as described below. The improved stack-type cell or bi-cell 130 of FIG. 11 may also be placed at the outmost side of the electrode assembly 400, and this may be advantageous in view of capacity (performance).

FIG. 13 is a cross-sectional view illustrating an example of the corresponding stack-type cell or bi-cell of FIG. 10.

Referring to FIG. 13, the corresponding stack-type cell or bi-cell 140 has a structure of cathode electrode 112/separator 16/anode electrode 114/separator 16/cathode electrode 112 stacked in order. Here, the cathode electrode 112 includes a cathode current collector 112a and a cathode active material 112b coated on both sides of the cathode current collector 112a, and the anode electrode 114 includes an anode current collector 114a and an anode active material 114b coated on both sides of the anode current collector 114a. During a stacking process of an electrode assembly, the cathode electrodes 112 of the corresponding improved stack-type cell or bi-cell 140 are stacked in contact with the outer separator 18 of the improved stack-type cell or bi-cell 130 of FIG. 11 and/or the second outer separator 18b of the improved stack-type cell or bi-cell 230 of FIG. 12, as described below.

FIG. 14 is a cross-sectional view illustrating another example of the corresponding stack-type cell or bi-cell of FIG. 10.

Referring to FIG. 14, the corresponding stack-type cell or bi-cell 240 has a structure of first cathode electrode 112/separator 16/anode electrode 114/separator 16/second cathode electrode 242 stacked or laminated in order. Here, the first cathode electrode 112 is equal to the cathode electrode 112 of the above embodiment and includes the cathode current collector 112a and the cathode active material 112b coated on both sides of the cathode current collector 112a, and the second cathode electrode 242 includes a cathode current collector 242a and a cathode active material 242b coated on one side of the cathode current collector 242a. The corresponding stack-type cell or bi-cell 240 may be located at the outmost side of the electrode assembly 400 during a stacking process of the electrode assembly 400, as described below. The corresponding stack-type cell or bi-cell 130 of FIG. 13 may also be placed at the outmost side of the electrode assembly 400.

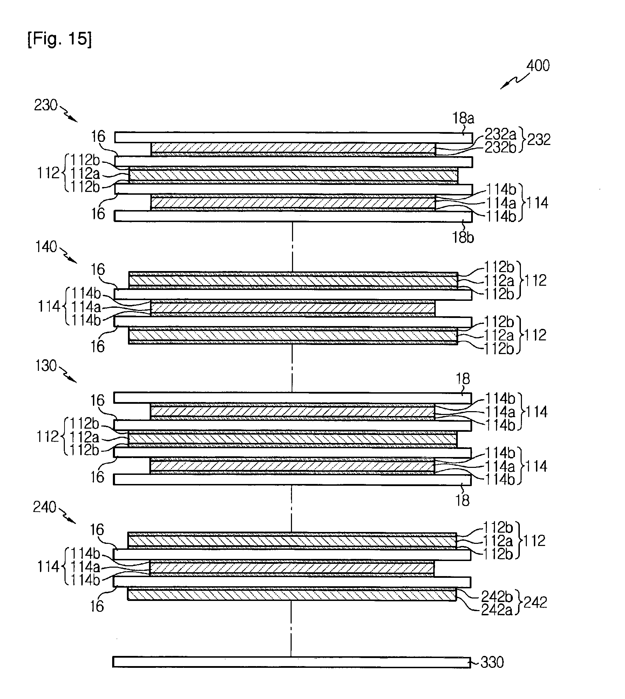

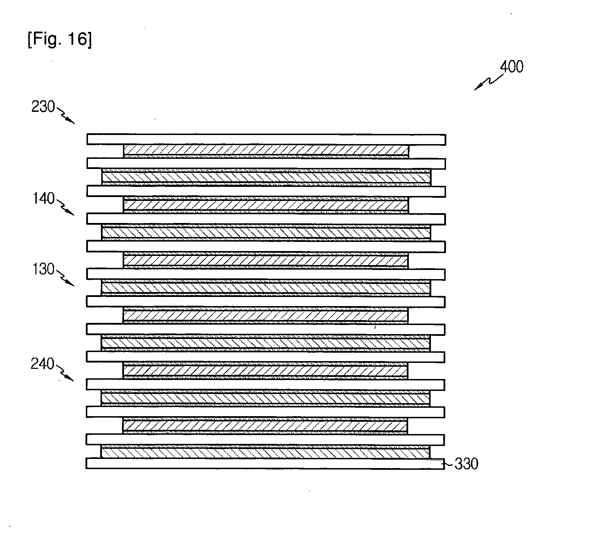

FIG. 15 is an exploded cross-sectional view illustrating an electrode assembly for a secondary battery according to another preferred exemplary embodiment of the present invention. FIG. 16 is an assembled cross-sectional view of FIG. 15.

Referring to FIGS. 15 and 16, the electrode assembly 400 according to an embodiment is constructed through a stacking process alone, rather than through both stacking and folding processes that have been used according to the conventional art, like the electrode assembly 300 described with reference to FIGS. 7 and 8. The electrode assembly 400 includes the improved stack-type cell or bi-cell 30, 130, and 230, and the corresponding stack-type cell or bi-cell 40, 140, and 240 stacked or laminated in order. That is, the electrode assembly 400 according to this embodiment includes a desired number of the improved stack-type cells or bi-cells 30, 130, and 230, and a desired number of the corresponding stack-type cells or bi-cells 40, 140, and 240 stacked sequentially or alternately or laminated under proper conditions, each cell composed of a plurality of electrodes and a plurality of separators stacked or laminated upon each other.

Specifically, the electrode assembly 400 according to this embodiment includes a structure of the improved stack-type cell or bi-cell 230 having the first outer separator 18a/corresponding stack-type cell or bi-cell 140/improved stack-type cell or bi-cell 130/corresponding stack-type cell or bi-cell 240 stacked in order, and the supplementary separator 330 stacked in contact with the cathode current collector 242a of the second cathode electrode 242 at the outmost side of the corresponding stack-type cell or bi-cell 240. In this instance, the number of stack-type cells or bi-cells used may be adjusted as desired.

Hereinafter, a method for manufacturing an electrode assembly for a secondary battery according to a preferred exemplary embodiment of the present invention is described.

The method for manufacturing an electrode assembly for a secondary battery according to this embodiment includes (a) preparing the improved stack-type cell or bi-cell 10 having a structure of outer separator 18/second electrode 14/separator 16/first electrode 12/separator 16/second electrode 14/outer separator 18 stacked or laminated in order, (b) preparing the corresponding stack-type cell or bi-cell 20 having a structure of first electrode 12/separator 16/second electrode 14/separator 16/first electrode 12 stacked or laminated in order, and (c) stacking or laminating a plurality of the improved stack-type cells or bi-cells 10 and a plurality of the corresponding stack-type cells or bi-cells 20 sequentially or alternately upon each other.

Here, the order of steps (a) and (b) is not critical. The step (b) is equal to a method for manufacturing a conventional stack-type cell or bi-cell. In step (a), the outer separators 18 are respectively stacked at the outmost sides of a conventional stack-type cell or bi-cell, followed by lamination. The stack-type cells or bi-cells 10 and 20 prepared in steps (a) and (b) are assembled with polarities arranged in an alternating manner, as described in the above embodiments.

When the improved stack-type cell or bi-cell 10 and the corresponding stack-type cell or bi-cell 20 are sequentially stacked, the method for manufacturing an electrode assembly according to this embodiment may further include stacking the supplementary separator 330 on any one electrode of the corresponding stack-type cell or bi-cell 20 that does not have the outer separator 18 used in the improved stack-type cell or bi-cell 10 at the outmost side of the corresponding stack-type cell or bi-cell 20. The supplementary separator 330 may protect the outmost electrode.

In the above embodiments, the terms 'improved stack-type cell or bi-cell' and 'corresponding stack-type cell or bi-cell' are used, however each may be referred to as a 'first stack-type cell or bi-cell' and a 'second stack-type cell or bi-cell', respectively. Also, when an improved stack-type cell or bi-cell and a corresponding stack-type cell or bi-cell are sequentially or alternately stacked on each other several times while a cell or bi-cell without an outer separator is located at the outmost side of an electrode assembly, a supplementary separator is further stacked on the electrode assembly to protect a current collector (electrode). However, it is obvious to an ordinary person skilled in the art that the number of any one of the improved stack-type cells or bi-cells and the corresponding stack-type cells or bi-cells in the electrode assembly may be larger by one than that of the other, if necessary.

In the above embodiments, the stack-type cell according to the present invention includes a so-called 3-stack cell having a structure of cathode electrode/separator/anode electrode/separator/cathode electrode and outer separators simultaneously or sequentially stacked on the outmost sides of the stack cell, however the present invention is not limited in this regard. It is obvious to an ordinary person skilled in the art that in an alternative embodiment, the stack-type cell according to the present invention may include, for example, a 5-stack cell having a structure of anode electrode/separator/cathode electrode/separator/anode electrode/separator/cathode electrode/anode electrode stacked in order and outer separators simultaneously or sequentially stacked on the outmost sides of the stack cell, a 7-stack cell having a structure of cathode electrode/separator/anode electrode/separator/cathode electrode/separator/anode electrode/separator/cathode electrode/anode electrode/separator/cathode electrode stacked in order and outer separators simultaneously or sequentially stacked on the outmost sides of the stack cell, or an odd-numbered stack cell more than the 7-stack cell and outer separators simultaneously or sequentially stacked on the outmost sides of the stack cell.

In addition, a person ordinary skill in the art may understand that a plurality of such 3-stack cells may be stacked or a structure where at least one 3-stack/5-stack/7-stack cells are stacked or laminated according to a desired capacity may be used.

Also, it is obvious to an ordinary person skilled in the art that, in another alternative embodiment, the outside of an electrode assembly including a plurality of A-type stack cells or C-type stack cells stacked or laminated upon each other and outer separators laminated onto the stack at once may be secured by heat fusion using a fixing film made from the same material as a separator or from polyethylene (PE), polypropylene (PP), polyester (PET), and the like.

In another preferred embodiment, the supplementary separator used in the above embodiments may be vertically extended, and the extended part of the supplementary separator may be used to wind the stack. Alternatively, a second supplementary separator may be used to wind both the supplementary separator and the stack. In this instance, the second supplementary separator may be a typical tape, or a separator (for example, a safety reinforced separator (SRS) with a coating described later) made from the same material as described herein. In other words, each separator between the stack, the supplementary separator, and the second supplementary separator may be formed from the same material or different materials.

Preferably, the separator used in the above embodiments is an SRS separator with a coating.

The SRS separator with a coating may have a porous coating layer on at least one surface of a separator. The porous coating layer is formed from a mixture of a plurality of inorganic particles and a binder polymer.

The inorganic particles used to form the porous coating layer are not limited to a specific type of inorganic particles as long as they are electrochemically stable. That is, inorganic particles usable in the present invention may be any inorganic particle so long as they do not bring about oxidation and/or reduction in the operating voltage range (for example, 0 to 5V in case of Li/Li+) of an electrochemical device to be applied. In particular, when the inorganic particles have a high dielectric constant, the degree of dissociation of electrolyte salts in a liquid electrolyte, for example, lithium salts may be increased, which results in improved ionic conductivity of an electrolyte.

For the above reasons, the inorganic particles preferably have a high dielectric constant of 5 or more, more preferably of 10 or more. The inorganic particles having a dielectric constant of 5 or more include, but are not limited to, BaTiO₃, Pb(Zr,Ti)O₃ (PZT), Pb₁₋ₓLaₓZr_{1-y}TᵢyO₃ (PLZT), PB(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, or mixtures thereof.

As the inorganic particles, there may be used inorganic particles capable of transferring lithium ions, that is, inorganic particles having a function of carrying lithium ions and of holding lithium atoms without storing lithium. The inorganic particle capable of transferring lithium ions include, but are not limited to, lithium phosphate (Li₃PO₄), lithium titanium phosphate (LiₓTi_{y}(PO₄)₃, 0 < x < 2, 0 < y < 3), lithium aluminum titanium phosphate (LiₓAlyTi_{z}(PO₄)₃, 0 < x < 2, 0 < y < 1, 0 < z < 3), (LiAlTiP)ₓO_{y} based-glass (0 < x < 4, 0 < y < 13) such as 14Li₂O-9Al₂O₃-38TiO₂-39P₂O₅, lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5) such as Li_{3.25}Ge_{0.25}P_{0.75}S₄, lithium nitrides (LiₓN_{y}, 0 < x < 4, 0 < y < 2) such as Li₃N, SiS₂ based-glass (LiₓSi_{y}S_{z}, 0 < x < 3, 0 < y < 2, 0 < z < 4) such as Li₃PO₄-Li₂S-SiS₂, P₂S₅ based-glass (LiₓP_{y}S_{z}, 0 < x < 3, 0 < y < 3, 0 < z < 7) such as LiI-Li₂S-P₂S₅, or their mixtures.

The particle size of the inorganic particles in the porous coating layer is not limited to a specific value, however the particle size is preferably in the range from 0.001 to 10 µm, if possible, in order to form a coating layer of a uniform thickness and ensure a suitable porosity. If the particle size is less than 0.001 µm, the dispersing property of the inorganic particles may be deteriorated. If the particle size is greater than 10 µm, the thickness of the porous coating layer may be increased, and thus, the possibility of an internal short circuit may be increased due to the large pore size while a battery is charged or discharged.

The binder polymer contained in the porous coating layer may be any polymer conventionally used for forming a porous coating layer on a separator in the art. In particular, a polymer having a glass transition temperature (Tg) between -200°C and 200°C is preferred because the mechanical properties of a resulting porous coating layer such as flexibility and elasticity can be improved. This binder polymer serves as a binder to connect or stably fix the inorganic particles or the inorganic particles to the separator.

Also, the binder polymer does not necessarily need to have ionic conductivity. However, the ionic conductivity of the binder polymer may further improve the performance of an electrochemical device. Thus, the binder polymer preferably has a dielectric constant as high as possible. In practice, the degree of dissociation of salts in an electrolyte is dependent on the dielectric constant of a solvent used in the electrolyte. Accordingly, a higher dielectric constant of the binder polymer may lead to a higher degree of dissociation of salts in an electrolyte. The dielectric constant of the binder polymer is in the range between 1.0 and 100 (as measured at a frequency of 1 kHz), particularly preferably 10 or above.

In addition to the above-described functions, the binder polymer may have characteristics of exhibiting a high degree of swelling by the gelling when impregnated with a liquid electrolyte. Preferably, the polymer has a solubility parameter of 15 to 45 MPa^{1/2}, more preferably 15 to 25 MPa^{1/2} and 30 to 45 MPa^{1/2}. Accordingly, hydrophilic polymers having many polar functional groups are preferred, rather than hydrophobic polymers such as polyolefins. When the solubility parameter is less than 15 MPa^{1/2} and greater than 45 MPa^{1/2}, the polymer is difficult to swell in a typical liquid electrolyte for a battery.

The polymer includes, but is not limited to, polyvinylidene fluoride-co-hexafluoropropylene, polyvinylidene fluoride-co-trichloroethylene, polymethylmethacrylate, polyacrylonitrile, polyvinylpyrrolidone, polyvinyl acetate, polyethylene-co-vinyl acetate, polyethylene oxide, cellulose acetate, cellulose acetate butyrate, cellulose acetate propionate, cyanoethylpullulan, cyanoethyl polyvinylalcohol, cyanoethylcellulose, cyanoethylsucrose, pullulan, and carboxymetyl cellulose.

Preferably, a composition ratio of the inorganic particles and the binder polymer in the porous coating layer formed on the separator substrate according to the present invention is, for example, between 50:50 and 99:1, more preferably between 70:30 and 95:5. When the composition ratio is less than 50:50, the high content of the polymer may decrease the pore size and porosity of the porous coating layer. When the content of the inorganic particles exceeds 99 parts by weight, the low content of the binder polymer may reduce the peel resistance of the porous coating layer. The pore size and porosity of the porous coating layer are not limited to specific values, however the pore size preferably ranges from 0.001 µm to 10 µm and the porosity preferably ranges from 10% to 90%. The pore size and porosity are mainly dependent on the particle size of the inorganic particles. For example, when the pore size is 1 µm or less, the porosity is about 1 µm or less. This pore structure is filled with an electrolyte to be injected later, and the filled electrolyte provides an ion transfer function. When the pore size and porosity are less than 0.001 µm and 10%, respectively, the porous coating layer may act as a resistant layer. When the pore size and porosity exceed 10 µm and 90%, respectively, the mechanical properties may be degraded.

The electrode assemblies according to the above embodiments are very useful to prismatic or pouch-type batteries. Generally, when a secondary battery is packaged, a liquid electrolyte is filled into a container, which may include an aluminum prismatic casing or an aluminum laminate film.

Also, it is obvious to an ordinary person skilled in the art that application of bi-cells according to various embodiments of the present invention and electrode assemblies using the same may be expanded to the similar fields of industry such as super capacitors, ultra capacitors, another type secondary batteries, primary batteries, fuel cells, a variety of sensors, electrolysis apparatus, electrochemical cells, and the like.

## Claims

1. A method for manufacturing an electrode assembly for a secondary battery, the method comprising:
preparing at least one first bi-cell consisting in a stack of first electrode/separator/second electrode/separator/first electrode arranged in order;
preparing at least one second bi-cell having a stack of outer separator/second electrode/separator/first electrode/separator/second electrode/outer separator arranged in order; and
alternately stacking the at least one first bi-cell and the at least one second bi-cell.

2. The method for manufacturing an electrode assembly for a secondary battery according to claim 1, further comprising:
stacking a supplementary separator on the outer surface of any one of the electrodes not having the outer separator.

## Patentansprüche

1. Verfahren zum Herstellen einer Elektrodenanordnung für eine Sekundärbatterie, wobei das Verfahren umfasst:
Bereitstellen von zumindest einer ersten Bi-Zelle, die aus einem Stapel aus erster Elektrode/Separator/zweiter Elektrode/Separator/erster Elektrode besteht, die der Reihe nach angeordnet sind;
Bereitstellen von zumindest einer zweiten Bi-Zelle, die einen Stapel aus äußerem Separator/zweiter Elektrode/Separator/erster Elektrode/Separator/zweiter Elektrode/äußerem Separator aufweist, die der Reihe nach angeordnet sind; und
alternierendes Stapeln der zumindest einen ersten Bi-Zelle und der zumindest einen zweiten Bi-Zelle.

2. Verfahren zum Herstellen einer Elektrodenanordnung für eine Sekundärbatterie nach Anspruch 1, das ferner umfasst:
Stapeln eines zusätzlichen Separators auf der äußeren Fläche von irgendeiner der Elektroden ohne den äußeren Separator.

## Revendications

1. Procédé pour fabriquer un ensemble d'électrodes pour une batterie secondaire, le procédé comprenant :
la préparation d'au moins une première bi-cellule consistant en une pile de première électrode/séparateur/seconde électrode/séparateur/première électrode agencés dans l'ordre ;
la préparation d'au moins une seconde bi-cellule ayant une pile de séparateur extérieur/seconde électrode/séparateur/première électrode/séparateur/seconde électrode/séparateur extérieur agencés dans l'ordre ; et
l'empilement en alternance d'au moins une première bi-cellule et d'au moins une seconde bi-cellule.

2. Procédé pour fabriquer un ensemble d'électrodes pour une batterie secondaire selon la revendication 1, comprenant en outre :
l'empilement d'un séparateur supplémentaire sur la surface extérieure de l'une quelconque des électrodes n'ayant pas le séparateur extérieur.
